Europäisches Patentamt

European Patent Office

Office européen des brevets

(11) Publication number: **0 204 502**

A1

## (12) EUROPEAN PATENT APPLICATION

(21) Application number: **86304052.3**

(22) Date of filing: **28.05.86**

(51) Int. Cl.⁴: **B 25 J 15/00**
**B 25 J 17/02, B 25 J 9/14**
**F 15 B 15/12**

(30) Priority: **28.05.85 GB 8513357**

(43) Date of publication of application:
**10.12.86 Bulletin 86/50**

(84) Designated Contracting States:
**DE FR IT NL SE**

(71) Applicant: **THE ENGLISH ELECTRIC COMPANY LIMITED**
**1, Stanhope Gate**
**London W1A 1EH(GB)**

(72) Inventor: **Knight, Peter Howard**
**2, Merton Close**
**Broughton Astley Leicester(GB)**

(74) Representative: **Tolfree, Roger Keith**
**GEC p.l.c. Central Patent Department Chelmsford Office**
**Marconi Research Centre West Hanningfield Road**
**Great Baddow Chelmsford Essex CM2 8HN(GB)**

(54) An articulated limb E.G. for a robotic manipulator.

㊼ A robot gripper finger is formed by three articulated sections (10, 16, 18) driven relative to each other by hydraulic rotary actuators (13, 20). Hydraulic fluid is transferred between adjacent sections via a connection (6-6J, 7-7J) which traverses abutting faces of the sections, with the possible interposition of seals (6C, 7C, 6I, 7I) between the faces. In this way the need for inconvenient flexible hoses is removed.

EP 0 204 502 A1

./...

*FIG. I.*

## AN ARTICULATED LIMB, E.G. FOR A ROBOTIC MANIPULATOR

This invention relates to an articulated limb driven by fluid power i.e., hydraulic or pneumatic. It arose in the design of a robotic manipulator where it is used as one of several fingers of a multi-purpose gripper. It could however be used for other purposes e.g., as a robot arm for carrying a gripper or other end effector; as an artificial limb for use by the disabled; or as a crane or excavator boom.

There are inherent advantages in using fluid power (hydraulic and pneumatic) to operate robotic manipulators. These advantages include the ability to apply high static and dynamic forces in a compact design. However, hydraulic and pneumatic systems can be relatively untidy and intrusive into the working area because of the need to use flexible hoses. These tend to limit the application of hydraulic and pneumatic technqiues to very simple pincer type manipulators where the number of flexible hoses is kept to a minimum. Robotic manipulators required to display any degree of dexterity are usually electrically driven.

In those cases where fluid power has been used in the past, the forces are usually generated linearly and then transferred into rotary motion by means of cranks and similar devices. This can result in the introduction of backlash into the system and is an inefficient means of generating torque. It also results in non-linearity of the relationship between force and movement: due to the change in geometry as the movement takes place.

A proposal described in U.K. patent specification 2119855A employs a single feed duct, passing between articulated sections of a manipulator to supply fluid pressure to control valves on each section. This overcomes the hose problem but at the expense of a similar wiring problem (each valve being a four wire connection). Also the mass and bulk of the valves is considerable causing intrusion into the working area and reducing dexterity.

According to this invention there is provided an articulated limb comprising: a first and a second control valve; a first member having first and second passageways arranged to receive the fluid from the respective first and second control valves; a second member pivotted to the first member; a first rotary actuator arranged to receive fluid from the first passageway in the first member and to pivot the second member relative to the first member; a hydraulic or pneumatic connection passing between opposing faces of the first and second members for supplying fluid from the second passageway in the first member to the second member; a third member arranged to be driven relative to the second member; and a second actuator arranged to receive fluid from the second member and to drive the third member relative to the second member.

It will readily be appreciated that by using the features of the invention as set out above, the advantages of fluid power can be obtained without the need for flexible hoses and their accompanying disadvantages. Furthermore the use of rotary actuation devices allows the required torque to be produced without the need for cranks and the like as previously mentioned. Finally, because the "fluid member" of the invention receives fluid from both control valves, the latter can be mounted on the first member (which may be fixed) thereby avoiding the problems associated with the system described in patent specification 2119855A.

A preferred feature of the invention is for the "second member" to have two opposite side pieces respectively defining flow and return passageways to and from the second actuator. These two side pieces preferably have a shaft extending between them by which the third member is pivotted and which also serves to transmit fluid from the flow passageway to the second actuator and then to the return passageway.

One way in which the invention may be performed will now be described by way of example with reference to the accompanying drawings in which:-

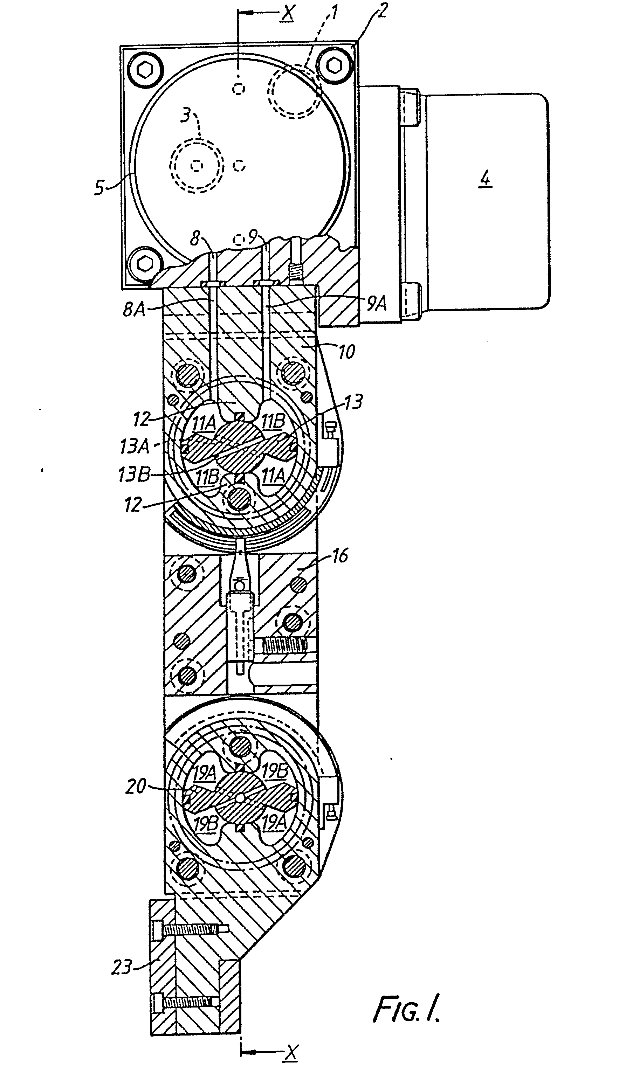

Figure 1 is a side view shown partly in elevation and partly as a vertical cross-section of a manipulator finger constructed in accordance with the invention and including three articulated members; and

Figure 2 is another side view shown partly in elevation and partly as a vertical cross-section through the line X-X of Figure 1.

Referring to the drawings, hydraulic fluid under pressure is applied from a source (not shown) to an input port 1 of a manifold 2 and returned to the source from an output port 3. To the manifold 2 are bolted two electrically operated flow or pressure control valves 4 and 5 which regulate the pressure differential applied to ducts 6 and 7, and 8 and 9 respectively. The ducts 6, 7, 8 and 9 connect to corresponding ducts 6A, 7A, 8A and 9A in a block 10 which is bolted to the manifold 2 and forms, in co-operation therewith, the first of the three articulated members of the illustrated robot finger.

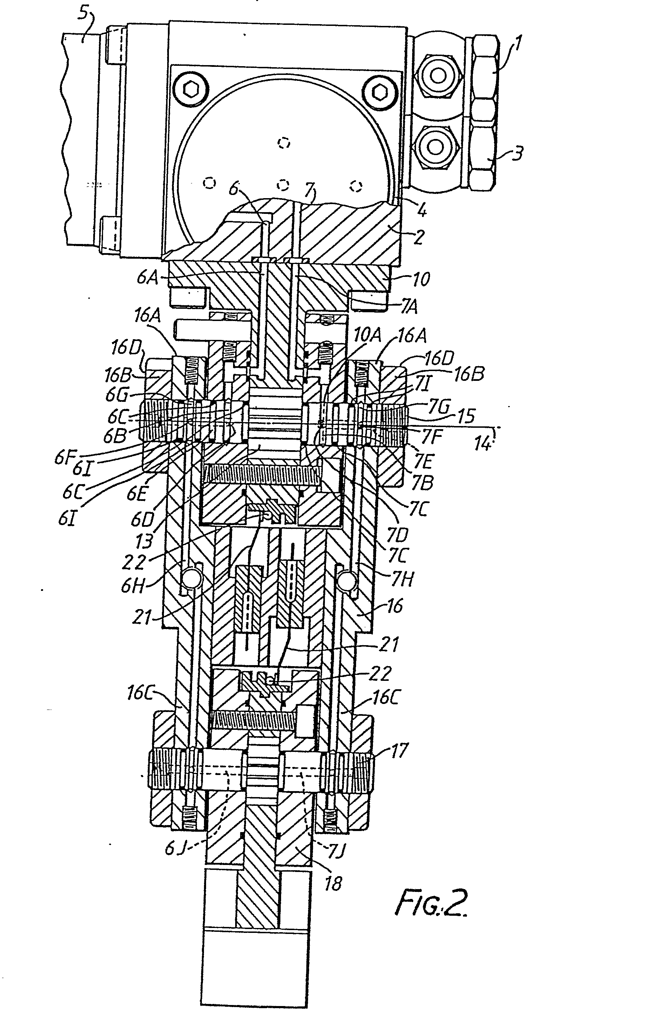

The ducts 8A and 9A lead to a cavity 11 in the block 10, this cavity being divided into four sections by projections 12 extending from a cylindrical wall of the cavity inwardly towards its centre; and by the arms of a vane-type rotor 13 which can rotate in the cavity about an axis 14 (Figure 2). The projections 12 have seals which act against a central boss of the vane, and the arms of the vane have seals which act against the cylindrical wall of the cavity 11. The cavity 11 is thus divided into two sections 11A and two sections 11B.  The sections 11A are joined by a bore 13A in the central boss of the vane 13.  The sections 11B are likewise joined by a bore 13B.  Differential pressure applied to the ducts 8A and 9A apply torque and rotational movement to the vane 13 without going through the intermediary stage of linear motion as in piston-and-cylinder arrangements as have previously been used in manipulator systems.  The idea of using bores or other ducts, like those shown at 13A and 13B, to join opposite sections of a rotary impeller cavity is considered to be a novel and inventive feature itself.

The vane 13 is rigidly mounted on a shaft 15 which rotates in a bore 10A in the block 10 of the first member.  The parts 13 and 15 however belong to a second member of the articulated finger.  The principal part 16 of this second member has, at its upper end, bifurcations 16A defining a recess between them, which recess receives the block part 10 of the first member.  The shaft 15 extends between the bifurcations and has splined ends which fit into splined bores in plates 16B, the latter being bolted to the bifurcations 16A to ensure that the shaft 15 and vane 13 are rigid with respect to the rest of the member 16.

The ducts 6A and 7A lead to parts of the surface of the bore 10A at opposite sides of the vane and communicate with circumferencial grooves 6B and 7B in the shaft 15. O-ring seals 6C and 7C prevent leakage between the connection formed between the co-operating cylindrical faces of the bore 10A and shaft 15. Radial bores 6D, 7D connects the grooves 6B and 7B to axial bores 6E, 7E in the shaft 15 and further radial bores 6F, 7F connect the axial bores to circumferencial grooves 6G, 7G similar to those shown at 6B, 7B. The grooves 6G, 7G connect with ducts 6H, 7H in the second member 16 and leakage from this connection is prevented by O-ring seals 6I, 7I. It will be appreciated that in an alternative construction the parts 15 and 16 could be made in one piece, eliminating the need for parts 16B, 6I, 7I and the grooves 6G, 7G.

The ducts 6H, 7H are bores extending through and along the length of the part 16 of the second member to its bottom end which has bifurcations 16C defining a recess between them. A shaft 17, also forming part of the second member, is splined to plates 16D bolted to the member 16 and has central bores 6J, 7J which communicate with bores 6H, 7H in like manner as do the bores of shaft 15. The shaft 17 passes through and rotates relative to a third and final member 18 of the articulated finger. This member 18 is received between bifurcations 16C. The axial bores 6J, 7J communicate at their inner ends with respective axial bores similar to those shown at 13A and 13B; and thence with respective sections 19A and 19B of a cavity 19 similar to the cavity 11. In this cavity 19 is a rotor 20 similar to the rotor 13. This is fixed to the member 16 and is driven in a similar way by a pressure differential in the ducts 6 and 7.

The central part 16 of the second member carries two wiper contacts 21, wiping along and making electrical contact with resistors 22 mounted on and conforming to the curved shape of the ends of the first and third members so that the wiper and the resistor remain in contact throughout rotation of the member. The parts 21 and 22 form rheostats whose outputs constitute feedback signals. The feedback signals are compared in a control circuit (not shown) with signals defining desired relative positions of the three members. The result of this comparison process is used to control the settings of the electrically operated control valves 4 and 5.

It will be appreciated that the illustrated manipulator finger is designed for use in co-operation with other identical fingers arranged in a group with plates 23 of the third members facing towards the centre of the group so that they can be made to engage and grip an object to be manipulated.

The illustrated configuration is just one example of how the invention can be put into practice. In other examples more than three articulated members can be included, or the third or subsequent member could be driven in a linear or other non-rotary motion.

CLAIMS

1.    An articulated limb comprising:   a first and a second control valve;  a first member having first  and second  passageways arranged to receive the fluid  from the  respective  first  and second  control  valves;  a second  member pivotted to the first member;   a  first rotary  actuator  arranged  to receive  fluid  from  the first  passageway in the first member and to pivot  the second  member  relative  to  the  first  member;   a hydraulic  or  pneumatic  connection  passing  between opposing  faces  of  the first and second  members  for supplying fluid from the second passageway in the first member to the second member;   a third member  arranged to  be  driven relative to the second  member;   and  a second  actuator  arranged  to receive fluid  from  the second member and to drive the third member relative to the second member.

2.    An articulated limb according to claim 1 in which the  second  member has two opposite side  pieces;  one defining  a  third passageway leading from  the  second passageway in the first member to the second  actuator, the  other  defining a return passageway for  returning fluid from the second actuator to the first member  and thence  a  source  of  fluid  pressure  via  a  further hydraulic  or  pneumatic  connection  passing  between opposing faces of the first and second members.

1/2

FIG. I.

FIG.2.

0204502

European Patent
Office

**EUROPEAN SEARCH REPORT**

Application number

EP  86 30 4052

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 119 084  (K.K. DAINI SEIKOSHA) <br> * Page 5, lines 26-33;  page  10, line  22 - page 11, line 11; page 18, lines 24-38 * | 1,2 | B 25 J   15/00 <br> B 25 J   17/02 <br> B 25 J    9/14 <br> F 15 B   15/12 |
| D,Y | FR-A-2 524 944  (MOOG INC.) <br> * Claims 1,5-12,16-19 * | 1,2 | |
| A | US-A-4 459 898  (HARJAR et al.) <br> * Column 11, line 66 - column 12, line 19 * | 1,2 | |
| A | EP-A-0 054 454  (RENAULT) | | |

TECHNICAL FIELDS
SEARCHED (Int. Cl.4)

B 25 J
F 15 B
A 61 F

The present search report has been drawn up for all claims

| Place of search | Date of completion of the search | Examiner |
|---|---|---|
| THE HAGUE | 03-09-1986 | MARTIN D.R.V. |